(19) Europäisches Patentamt / European Patent Office / Office européen des brevets

(11) **EP 4 379 321 B1**

(12) **EUROPEAN PATENT SPECIFICATION**

(45) Date of publication and mention
of the grant of the patent:
**03.06.2026   Bulletin 2026/23**

(21) Application number: **22210581.9**

(22) Date of filing: **30.11.2022**

(51) International Patent Classification (IPC):
**G01C 21/00** (2006.01)   **G06T 7/11** (2017.01)
**G06V 10/764** (2022.01)   **G06V 20/56** (2022.01)
**G06V 10/26** (2022.01)   **G06V 10/82** (2022.01)

(52) Cooperative Patent Classification (CPC):
**G01C 21/3811; G01C 21/3837; G01C 21/3848;
G06V 10/267; G06V 10/764; G06V 10/82;
G06V 20/56**

(54) **METHOD FOR DETECTION OF MAP DEVIATIONS, SYSTEM AND VEHICLE**

VERFAHREN ZUR ERKENNUNG VON KARTENABWEICHUNGEN, SYSTEM UND FAHRZEUG

PROCÉDÉ DE DÉTECTION D'ÉCARTS CARTOGRAPHIQUES, SYSTÈME ET VÉHICULE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**05.06.2024   Bulletin 2024/23**

(73) Proprietor: **VOLKSWAGEN AG
38440 Wolfsburg (DE)**

(72) Inventors:
• **PLACHETKA, Christopher
38458 Velpke (DE)**
• **FINGSCHEIDT, Prof.Dr.-Ing. Tim
38104 Braunschweig (DE)**

(56) References cited:
**US-A1- 2021 199 446   US-A1- 2021 231 460
US-A1- 2021 331 703   US-A1- 2022 197 286**

• **ANONYMOUS: "Image segmentation - Wikipedia", WIKIPEDIA, 13 September 2022 (2022-09-13), pages 1 - 23, XP093048109, Retrieved from the Internet <URL:https://en.wikipedia.org/w/index.php?title=Image_segmentation&oldid=1110069485#Applications> [retrieved on 20230519]**

• **VADAPALLI PAVAN: "Image Segmentation Techniques [Step By Step Implementation]", 19 February 2021 (2021-02-19), pages 1 - 15, XP093048038, Retrieved from the Internet <URL:https://www.upgrad.com/blog/image-segmentation-techniques/> [retrieved on 20230519]**

• **BANDYOPADHYAY HMRISHAV: "What Is Instance Segmentation? [2023 Guide & Tutorial]", 22 February 2022 (2022-02-22), pages 1 - 21, XP093048049, Retrieved from the Internet <URL:https://www.v7labs.com/blog/instance-segmentation-guide> [retrieved on 20230519]**

• **BOZIC JAKOB ET AL: "End-to-end training of a two-stage neural network for defect detection", 2020 25TH INTERNATIONAL CONFERENCE ON PATTERN RECOGNITION (ICPR), IEEE, 10 January 2021 (2021-01-10), pages 5619 - 5626, XP033909708, DOI: 10.1109/ICPR48806.2021.9412092**

Processed by Luminess, 75001 PARIS (FR)

**Description**

Modern vehicles, in particular automated or autonomous vehicles, are depending on the availability of high-definition (HD) map data. This map data provides the vehicle with information relevant to the driving function, for example with information on lanes for trajectory planning or on pedestrian crossings for predicting behavior. Such driving function is prone to failures if the map data deviates from the real world in terms of map elements or relations between elements.

Such map deviations may occur due to environment changes that render the map outdated (e.g., due to a construction site) during the progression of time. Further, it may occur that the map data is already incorrect at the time of creation (e.g., due to errors during map generation by a map supplier). Both circumstances may result in map deviations, i.e. deviations between the stored map and the real vehicle environment. If the deviations remain undetected, a risk may occur to the vehicle and its occupants, since incorrect assumptions regarding the environment may be processed by the driving function of the vehicle or other subsystems. Hence, dependable maps are required to reduce the risk due to map deviations.

Specifically, dependability regarding maps requires a system that detects, specifies, and corrects map deviations in order to obtain maps that are safe to use, reliable, and available. In particular, the safe use of map data requires to the detection of deviations in the surrounding of the vehicle, while reliable maps may be obtained by short update cycles. Available maps despite the presence of deviations may be obtained within the vehicle by correcting deviations in real time, e.g., in construction site scenarios.

Methods and systems for detecting HD map elements are known (e.g., for road markings, traffic lights or lanes) but have disadvantages, such as a decreased performance in bad weather conditions for traffic signs, or if elements are partly occluded. Therefore, there may be a need for a deviation detection method and a system that simplifies the detection by leveraging the map as source of initial hypotheses regarding possible map element locations and features.

US 2021/0231460 A1 describes a change point detection device and a map information distribution system. The change point detection device includes a memory that stores map information representing a structure associated with a traveling condition on and around a road, an object detection unit that detects a shielding object hiding the structure from an image acquired by an in-vehicle camera mounted on a vehicle and representing an environment around the vehicle, a collation unit that eliminates the structure hidden by the shielding object in the map information, collates the image with the map information, and calculates a coincidence degree between the image and the map information, and a change point detection unit that determines, when the coincidence degree is less than or equal to a predetermined threshold value, that the structure represented in the image has a change point different from the corresponding structure represented in the map information.

US 2022/197286 A1 describes systems and methods for updating navigational maps by using at least one sensor. A control system for an autonomous vehicle includes a processor and a computer-readable memory configured to cause the processor to: receive output from at least one sensor located on the autonomous vehicle indicative of a driving environment of the autonomous vehicle, retrieve a navigational map used for driving the autonomous vehicle, and detect one or more inconsistencies between the output of the at least one sensor and the navigational map. The computer-readable memory is further configured to cause the processor to: in response to detecting the one or more inconsistencies, trigger mapping of the driving environment based on the output of the at least one sensor, update the navigational map based on the mapped driving environment, and drive the autonomous vehicle using the updated navigational map.

US 2021/331703 A1 describes techniques relating to monitoring map consistency. A monitoring component associated with a vehicle can receive sensor data associated with an environment in which the vehicle is positioned. The monitoring component can generate, based at least in part on the sensor data, an estimated map of the environment, wherein the estimated map is encoded with policy information for driving within the environment. The monitoring component can then compare first information associated with a stored map of the environment with second information associated with the estimated map to determine whether the estimated map and the stored map are consistent. Component(s) associated with the vehicle can then control the object based at least in part on results of the comparing.

It is an object of the present invention to improve map deviation detection.

This object is solved by the independent claims. The present invention is providing a method, a system, and a vehicle. The present invention refers to a method, in particular to a computer-implemented method.

The present invention provides a method for a detection of map deviations and verifications according to claim 1.

The present invention provides a map deviation detection system, in particular a (deep learning-based map deviation detection system, using a neural network including necessary training procedures and components. As a result there is provided a classification for map elements.

To enable the neural network to detect map deviations and to facilitate the verification of map elements, the map may be projected into the image plane as initial hypothesis regarding the stationary environment. Thus, the network may directly evaluate an existing element hypothesis by comparing available image data to map data. Hence, the network may model expected sensor data distributions for specific map elements internally to deduce the evaluation state (e.g., verified or deviating) by comparing sensor data to map hypotheses. This method may result in a high performance, especially in the presence of degenerated image data, e.g., in darkness, overexposure, or in bad weather conditions such as rain, snow, or fog. Moreover, deviation detection is carried out within the (spatial) two-dimensional (2D) image space. Such operation using two spatial dimensions may allow for the application of well-developed, image-based neural network architectures commonly used in the field of object detection. Such architectures operating in 2D may be highly performant while featuring a low runtime.

According to one variant of the present invention there may be provided a system for a detection of map deviations according to claim 10.

Further, according to one aspect of the present invention, it may be provided a three-dimensional positioning of one or more elements, in particular providing a three-dimensional spatial positioning of map elements.

The (spatial) three-dimensional (3D) positions of map elements may be obtained in a separate processing step using depth measurements as input, e.g., originating from a LiDAR sensor. Alternatively, the 3D positioning of map elements may also be integrated into network operating in 2D by construction depth images as additional input to the network.

It is provided a method for the detection of map deviations. The respective system may detect map deviations and verifications, respectively, in a 2D image plane using a neural network performing instance segmentation. The term "verifications" in this context refers to elements identified as correctly represented in the map. "Deviations" on the other hand comprise deviating elements, e.g., elements falsely existing in the map. The network performing instance segmentation is provided with the map as source of initial hypotheses regarding possible element locations and features by projecting respective elements onto the image plane and fusing these projections with the RGB image. During instance segmentation, a neural network predicts so-called segmentation masks, identifying pixels that belong to individual object instances. However, as the network operates in 2D, a separate component may be utilized to obtain the (spatial) 3D position for each map element.

According to an exemplary embodiment the method further comprising providing a three-dimensional positioning that is carried out within the network directly by using LiDAR, RADAR, or depth estimations for pixels as additional input.

The integration of the 3D spatial positioning component into the network operating in 2D may allow for a reduced runtime as both map evaluation (verifying correct elements and detecting deviations) and the spatial position (e.g., Cartesian position and orientation) of elements is predicted in one single processing step.

According to an exemplary embodiment the method further comprising providing an artefact compensation.

To increase the amount of training data, the utilization of simulated map deviations is preferred. Thereby, map elements may be removed from the image data. Resulting gaps (artefacts), being blacked areas in the image from removing elements from the image, may be compensated using a specialized artefact compensation component, e.g., to fill respective gaps in a meaningful way.

According to an exemplary embodiment the method further comprising providing an interpolation of pixels.

The interpolation of pixels may provide a simple and fast strategy to compensate artefacts, which may be useful in particular for small artefacts.

According to an exemplary embodiment the method further comprising receiving input data from a GAN for providing the artefact compensation.

A GAN is understood as a Generative Adversarial Network. Here, a GAN may serve as a more performant variant for artefact compensation. In particular, the GAN may be used to fill realistic backgrounds into larger artefacts.

According to an exemplary embodiment the method further comprising performing the instance segmentation predicting an "unknown" state for occluded elements.

As the proposed method relies on a neural network (for instance segmentation), the integration of further evaluation states for map elements (besides verified or deviating) may be a possible approach. The identification of an "unknown" state for map elements prevents false deviation predictions (e.g., the element being predicted as falsely exiting in the map when the element is only occluded).

According to an exemplary embodiment the method further comprising utilizing main classes for segmentation of elements comprising at least signs, lights, poles, markings, lanes, and construction site elements as main classes.

The integration of further map element types is also possible. However, the types mentioned are considered as relevant for the safety of the automated vehicle. Also, predicting all element types simultaneously may even increase performance given a network with enough capacity to model respective features, as for instance, poles, signs, and lights often occur as one semantic group.

According to an exemplary embodiment the method is performed during a movement of a vehicle. Further it is possible to perform the method in an offline-fashion within a computing cluster.

Using the present invention and its exemplary embodiments within a vehicle may allow the safe operation of the vehicle, as deviations within the map while driving can be detected. However, it may be beneficial, for better performance, to record sensor data in the presence of deviations for later transmission to a computing cluster. In such cluster, larger networks may be utilized, computing more accurate deviations in an offline-fashion in order to provide map updates to vehicle fleet.

According to an exemplary embodiment the method further suggests that the classification is provided as a two-stage procedure.

For map elements featuring a large number of possible values regarding discrete attributes (e.g., traffic signs with their detailed classifications), it may be beneficial to outsource the evaluation of subclasses into a separate processing step. The initially obtained spatial positions of map elements are first projected into the image place, cropped, and then provided as input to a specialized classification algorithms.

The object of the present invention is also solved by a system. The system according to the present invention is a system for a detection of map deviations and verifications comprising an artefact compensation component; a deviation simulation component for training purpose; a projection component; and an instance segmentation component; wherein the artefact compensation component is adapted to receive data from a camera; wherein the deviation simulation component data is adapted to receive data from a map; wherein the a projection component is projecting elements from the map into the camera image; wherein the instance segmentation component is adopted to utilize a neural network.

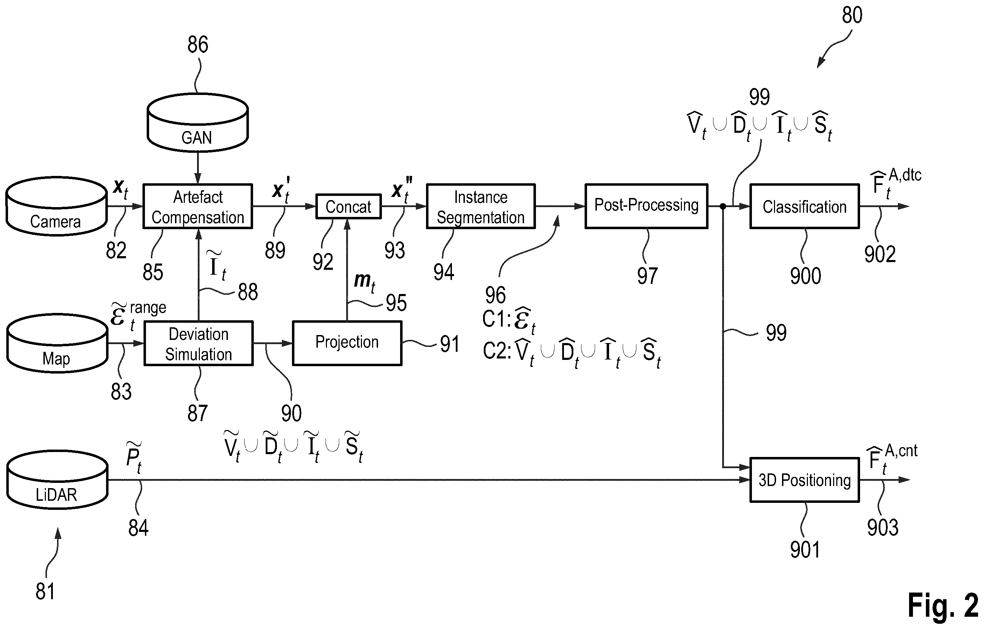

To train the neural network performing map deviation detection using an instance segmentation (see the instance segmentation component in Fig. 2), a facilitating system may be used to simulate deviations to increase the amount of training data available. Specifically, deviations may be simulated by removing elements either in sensor or map data, or substituting elements in the map data. Resulting artefacts from removing map elements from the image may be compensated. To provide the map as source of initial hypotheses regarding possible map element location and features, the (deviating) map may be projected onto the image plane, and concatenated to an RGB image to provide the input to the instance segmentation. Such projection may increase the performance regarding the detection of both verifications and deviations.

According to an exemplary embodiment the system further comprising a post-processing component which is adapted to receive the output of the instance segmentation component.

A post-processing component may be necessary to convert map elements predicted by the instance segmentation network into verifications and deviations, e.g., by comparing respective element detections with elements from the (deviating) map. Also, in the case the 3D positioning being integrated into the instance segmentation network, the post-processing component may fuse multiple (possibly pixelwise) position predictions for each map element.

According to an exemplary embodiment the system further comprising a three-dimensional positioning component which is adapted to receive input data of a sensor, in particular of a LiDAR or RADAR sensor, or receiving input data from a depth estimation algorithm.

To obtain 3D positions of map elements, respective spatial measurements may be required. To this end, LiDAR (light detection and ranging), RADAR (radio detection and ranging), or a depth estimation algorithms (e.g., a neural network predicting a range for each pixel from monocular images) may be utilized.

According to an exemplary embodiment the system further foresees that the three-dimensional positioning component is adapted to receive input data from the post-processing component comprising verifications and deviations, for which the (spatial) 3D positions are desired.

A 3D positioning component may receive input data from the post-processing component and, in addition, input from a LiDAR, RADAR, or depth estimation algorithm, in order to process 3D positioning.

According to an exemplary embodiment the system further suggests that the projection component is adapted to filter unknown map elements.

To optimize performance, it may be beneficial to outsource the task of identifying unknown elements due to occlusion into a separate network dedicated to this task, instead of unknown elements being simultaneously identified using the network performing instance segmentation. Unknown elements may then not be projected into the image plane and being excluded from further processing steps.

The object of the present invention is solved by a vehicle, in particular an autonomous driving vehicle, comprising the suggested system.

The vehicle may be an automated vehicle which is able to at least partly drive without any human interaction. Further, the vehicle may be an autonomous vehicle, preferably of level 4 or level 5 of autonomous driving category. The vehicle may be a self-driving vehicle, such as an automobile, an electric vehicle, an electric car, a van, a truck and the like. Applying the present invention within an autonomous vehicle may increase the safety of the driving function, as driving based upon false map assumptions may be prevented.

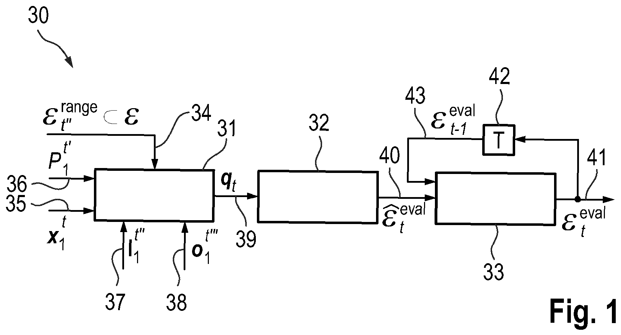

Exemplary embodiments of the present invention are described below with reference to the accompanying drawings, which are not necessarily drawn to scale. It should be understood that the described and illustrated features of the exemplary embodiments of Fig. 1 and Fig 2 may be combined to further embodiments. Furthermore, the exemplary embodiments can also be added by further features of the invention and its embodiments. Elements of the same or similar function are provided with the same reference signs in the figures.

The drawings illustrate:

Fig. 1    a first exemplary embodiment of an overall system for a map deviation detection; and

Fig. 2    a second exemplary embodiment of system for the deviation detection component within the overall system.

Fig. 1 illustrates a first exemplary embodiment of a system 30 for map deviation detection (MDD). The system 30 for detecting map deviations is shown with its main components in Fig. 1. The system 30 comprises three main components: a data association component 31, a deviation detection component 32, and a recursive state estimation component 33.

Data Association Component

In the data association component 31, data packets from asynchronous data streams are first related and synchronized. This is useful because sensors (e.g., camera and LiDAR) and subsystems (e.g., localization) provide their data with different timestamps. Especially sequences of images 35, point clouds 36, localization data in the form of global poses on a map 37 (e.g., encoded in WGS84 or UTM as global coordinate systems) and vehicle odometry data 38 may be considered as input data (indices and exponents illustrated in Fig. 1 indicate a time sequence comprising multiple data instances from 1 to e.g., t, e.g., multiple images). The integration of RADAR data or other sensors is also possible as input data. Tensors and vectors are denoted using bold smaller case letters, e.g., an image $x_t$, while sets are denoted using upper case letters, e.g., a set of map elements $\varepsilon$. Images, point clouds (usually generated by a rotating laser scanner), localization poses, and odometry data may be generated at different timestamps ($t$, $t'$, etc.).

The set of elements of the HD map $\mathcal{E}_{t''}^{\mathrm{range}}$ 34 as subset of all map elements stored in the map $\varepsilon$ (e.g., signs, traffic lights, markings, etc.) that are within the range of the sensors or within the range of the deviation detection method (given by the location of the vehicle on the map determined by the localization at the time t") may be combined with the sensor data (camera, LiDAR, odometry) to form a sample $q_t = (x_t, \tilde{P}_t, \tilde{\mathcal{E}}_{t''}^{\mathrm{range}})$ 39 (comprising a single, synchronized image, a synchronized point cloud, and synchronized a set of map elements in range). The range of the method may be smaller than the range of the sensors, since, for example, the density of the point cloud of a LiDAR scan may decrease as the distance from the sensor origin increases, so that object prediction may be no longer possible.

In a first stage of data processing, the data association component 31 is provided for the association of data packets of asynchronous data streams. For example, a camera delivers images at a significantly higher frequency (for example 20 Hz) compared to the provision of point clouds by the laser scanner (for example 10 Hz).

For this purpose, a data packet from a sensor is selected as a timestamp reference in order to generate a sample $q_t$ 39, for instance a point cloud $P_{t'}$ from the laser scanner. Since point clouds are usually generated by rotating laser scanners, point clouds encompass a range of different timestamps.

To associate a single image $x_t$, a localization pose $l_{t''}$ (pose = position and orientation on the map), and odometry data (with $o_{t''}$ being a single odometry measurement) to a point cloud $P_{t'}$ (originating from their respective sequences, e.g., $x_1^t$), the mean timestamp of the point cloud is selected (mean of the timestamp of the first and last measurement). The image with the smallest absolute timestamp difference to the mean timestamp of the point cloud may be selected from the stream of data packets from the camera. The procedure for the localization poses may be performed analogous. With regard to the odometry data (generated by for example 100 Hz), all measurements within the first and the last timestamp may be used for a next step. It would be also possible utilizing the measurement with the smallest time difference to the mean timestamp of the point cloud as an approximation.

In order to superimpose map data and sensor data as precisely as possible in terms of their spatial position, the data may be synchronized with one another. In a preferred embodiment, this is done with reference to the timestamp of the image at timestamp $t$, since map elements and point measurements may be moved more easily than pixels in an image in order to improve the spatial alignment of map and sensor data.

In the present example, the camera may create an image at time $t$. Surrounding map elements $\mathcal{E}_{t''}^{\mathrm{range}}$ 34 may be determined at a slightly later time $t''$ by the localization subsystem. Due to the time difference $\Delta t = t'' - t$, map elements may be not projected to the right place when projecting into the image plane. For this reason, the position of the map elements at time t (being the timestamp of the image selected for synchronization) instead of at time t" (being the timestamp of the localization pose) would be necessary. The position of map elements at time t can be estimated from the own movement of the vehicle (using the respective odometry data) and the time difference. We denote synchronized map elements as $\tilde{\mathcal{E}}_t^{\mathrm{range}}$ (as used in Fig. 2 with the tilde indicating an applied synchronization).

For determining the required translation and rotation for the map elements to estimate their position at time t, different approaches may be applied.

As a first possible approach ("first approach"): The translation and rotation necessary to improve spatial alignment of both map elements and point cloud may be obtained using a single odometry measurement. To this end, the odometry measurement at timestamp $t''$ with the smallest timestamp difference regarding the image timestamp $t$ is selected. Alternatively, the odometry measurement closest to the timestamp of the localization pose or closest to the mean timestamp of the point cloud would also be possible; the inaccuracy regarding the spatial alignment of synchronized map elements with the image data would be similar in all cases.

As a second possible approach ("second approach"): The translation and rotation may be determined based on the path travelled by the vehicle within the time difference $\Delta t$. To this end, individual odometry measurements can be integrated within the time difference $\Delta t$ to obtain the path travelled.

A synchronization of the point cloud $P_t$ may be performed according to the same principle. Each individual point of the point cloud may be shifted using the first or the second approach. For points belonging to stationary map elements, the synchronization may lead to an optimization of the overlap of point measurements and map elements. Note that for points belonging to mobile road users, the synchronization is not exact due to the movement of these road users - but it is not required either. Depending on the runtime requirements, two variants of procedures can be used. We denote the synchronized point cloud as $\tilde{P}_t$ (as seen in Fig. 2).

First variant: Each single point may be synchronized individually (using the first or the second approach). This synchronization operation may be computationally intensive and may preferably be implemented in an offline application.

Second variant: The point cloud may be divided into radial sectors (e.g., four in number). The translation and rotation may be calculated for all points in the sectors using the first or second approach. This may reduce advantageously the computing effort required to synchronize all points.

Deviation Detection Component

The deviation detection component 32 receives a sample $q_t$ 39 as input data and provides a (predicted) set of evaluated map elements $\hat{\mathcal{E}}_t^{\mathrm{eval}}$ as an output 40 (the hat indicating a prediction), with each element in this set comprising an existence likelihood and respective continuous as well as discrete attributes (e.g., the position in Cartesian coordinates or the class of a sign).

A set of evaluated map elements $\mathcal{E}_t^{\mathrm{eval}} = V_t \cup U_t \cup F_t$ includes correctly associated (verified) elements (verifications $V_t$), non-evaluated occluded elements $U_t$ and deviating map elements $F_t$. The set of deviating map elements $F_t = F_t^{\mathrm{PS}} \cup F_t^{\mathrm{A}}$ on the other hand may comprise a set of physical and semantic deviations $F_t^{\mathrm{PS}}$ and elements with deviating attributes $F_t^{\mathrm{A}}$. A missing lane is an example of a semantic map element, which may result from physical lane markings. The deviation detection component 32 may detect deviations regarding the existence of physical and semantic

elements $F_t^{\mathrm{PS}} = D_t \cup I_t \cup S_t$ : elements missing in the map (deletions $D_t$), elements that exist incorrectly in the map (insertions) $I_t$ or elements that are substituted by another element in the map (substitutions) $S_t$. Also, the deviation detection component detects deviating elements $F_t^{\mathrm{A}}$ regarding their respective attributes (discrete or continuous). Verifications, deletions, insertions, substitutions, and elements featuring attributional deviations may be understood as separate lists, whereby a map element can only be assigned to one of these lists.

The detection of attributional deviations may be done in a single processing step or using a two-step strategy. Regarding such a two-step variant, a map element that is initially classified as verification may be included into a list of map elements comprising attributional deviations $F_t^{\mathrm{A}}$ and then be deleted from the (initial) list of verifications.

Recursive State Estimation Component

A deviation detection component may generate an individual set of evaluated map elements $\hat{\mathcal{E}}_t^{\mathrm{eval}}$ 40 for each sample $q_t$ 39. The determined values regarding the existence of map elements (e.g., measured by an existence score) or their attributes (e.g., a continuous orientation of a sign) may vary from sample to sample. A component for recursive state estimation 33 may be connected downstream of the deviation detection component 32 for detecting deviations. This may stabilize the measurements spatially and temporally by accumulating individual measurements, e.g., as a stabilization of varied existence likelihoods or orientation values over time. Various methods may be applied, e.g., the method of least squares, Kalman filtering or Bayesian state estimation.

Deviation Detection

Fig. 2 illustrates an exemplary embodiment of a system architecture for the deviation detection component from Fig. 1 based on an instance segmentation. The deviation detection may be performed in the two-dimensional camera image, allowing for the application of well-developed network architectures operating in such a two-dimensional image space. The embodiment illustrated in Fig. 2 is using the projection of the map data onto the image plane as source if initial element hypotheses to facilitate deviation detection. Subsequently, the 3D positions of map elements may be obtained either by the applied instance segmentation network itself, or in a subsequent processing step utilizing the LiDAR measurements as illustrated in Fig. 2. For better clarity, the consideration of "unknown" map elements $U_t$ is not illustrated in Fig. 2 but will be explained further below.

Two variants may be considered regarding the neural network performing instance segmentation, providing different output variants (C1 and C2 in Fig. 2). The first variant (C1) utilizes an "object detection DNN", while the second variant (C2) features a "deviation detection DNN".

Regarding the first variant (object detection DNN), the network is trained to detect objects (map elements) in the input image. The image may be fused with the map data to provide initial element hypotheses to facilitate the object detection task. Thereby, the output corresponds to a list of individual elements $\hat{\varepsilon}$ (C1), e.g., comprising traffic signs, traffic lights, etc., including their obtained detection uncertainties, e.g., in the form of an existence likelihood in the range between 0 and 1. To obtain deviations from the list of predicted map elements, a comparison has to be performed, which is carried out within the post-processing component 97 of Fig. 2. Thereby, two lists of map elements are being compared: the list of detected objects $\hat{\varepsilon}$ with the list of map elements within range $\varepsilon_{t''}^{\mathrm{range}}$.

During this explicit comparison, the map elements of both lists (examined map elements and predicted map elements) may be associated to each other to determine the amount of verifications, deletions, insertions and substitutions, which yields $\hat{V}_t \cup \hat{D}_t \cup \hat{I}_t \cup \hat{S}_t$ (see 99 in Fig. 2 after post-processing 97). To associate map elements, a set of (possibly different) association metrics may be defined for each type of map element in order to measure the overlap of the detected map elements with the examined map elements. For example, such a metric provides 0 if map elements do not overlap at all and provides 1 in case of complete overlap.

Regarding the second variant (deviation detection DNN), as one preferred exemplary embodiment of the invention, the output of the DNN may be modified to directly predict verifications and deviations (see C2 in Fig. 2): $\hat{V}_t \cup \hat{D}_t \cup \hat{I}_t \cup \hat{S}_t$ omitting the need for a subsequent explicit comparison with the deviating, examined map during post-processing. This variant may require the (projected) map data as additional input to the DNN. Hence, the DNN performs an implicit comparison of map and image data internally, which is trained in an end-to-end fashion, without the need for manually formulated association metrics used for element comparison purposes.

While projecting the examined map into the camera image, a lookup table (LUT) may be generated, e.g., mapping the identifier of an element to pixel indices. Thus, if an element is predicted as verification or deviation by the DNN, the identifier of the map element can be retrieved easily using the LUT, e.g., to obtain the element's attributes, or for map updating purposes by sending status updates for the respective map element to an external server. The evaluation state of an element (verification, deletion, insertion, subtraction, substitution) may be derived during post-processing 97 using the evaluation of individual underlying pixels for which the LUT can be quoted to retrieve the originally projected element.

After detecting verifications and deviations (either obtained by variant C1 or C2), respective elements may be further evaluated in detail to determine elements with deviating attributes. These may include deviating continuous attributes (e.g., the orientation of a traffic light) or discrete attributes (e.g., the class of a sign). The attributional deviation may be determined by comparing the value of an attribute of a detected map element with the respective attribute of the stored element.

A two-stage procedure may be performed to evaluate the correctness of discrete attributes of an element that features a large number of possible values, e.g., the classification of a sign (e.g., "stop" sign). First, the position of the element may be determined (e.g., directly during instance segmentation in Fig. 2 or using the 3D positioning component 901 in Fig. 2). The position of the sign may then be projected into the image of a front camera using the camera parameters (intrinsic and extrinsic). The image section obtained from this can be classified, for example, using another neural network. Such procedure may simplify the detection task into a classification task, with the latter typically providing a higher performance. Finally, the class determined in this way may again be compared with the class of the stored element in order to determine possible deviations.

System variants for the deviation detection component may use the map as an initial estimate of the environment (C2 variant). This enables in an easy manner the verification of existing map elements, especially in the case of partial occlusion of map elements and sensor data of reduced quality (e.g., featuring a lower point cloud density in bad weather conditions), since no complete object detection without context has to be carried out. Instead, the sensor data has only to be compared with an existing map hypothesis in order to confirm an element or to detect substitutions or insertions. For the detection of deletions (elements missing in the map), the provision of existing map hypotheses can also be advantageous due to the inclusion of contextual knowledge regarding the scene within the object detection. Thereby, such variants may incorporate the detection of deviations regarding in the main class of an element (referring to deletions, insertions, substitutions), e.g., sign, traffic light, or pole, and deviations regarding their attributes (continuous or discrete). Deviations regarding discrete attributes featuring a large number of possible values, such as a subclass (e.g., stop sign, speed limit etc.), may be evaluated using the aforementioned two-stage process using specialized classification algorithms.

Artefact Compensation

To train the deviation detection DNN detecting map deviations (as it may be used in the instance segmentation 94 in Fig. 2), two approaches may be applied.

First, real world deviations may be obtained from comparing two maps at different time instances. Second, being the preferred embodiment, map deviations may be simulated to increase the amount of training data available (using only a single map that is assumed to be correct and fits the sensor data). This step, however, requires the compensation of artefacts as described subsequently (artefact compensation 85 in Fig. 2).

Specifically, (synchronized) insertions $\tilde{I}_t$ 88 (elements that do not exist in the sensor data and falsely exist in the map) should be cut out from the camera image, while remaining in the map data. The resulting artefacts from removing respective pixels in the camera image (appearing now as black areas in the image) must be compensated in a semantically realistic fashion. To this end, a simple variant may use the interpolation of surrounding pixels, whereby a continuous transition between colors at the edges of the removed image area may be ensured.

In the preferred embodiment in Fig. 2, a GAN 86 (Generative Adversarial Network) is used to create realistic backgrounds for map elements removed from the image. Such a GAN is trained independently before performing any step of the procedure in Fig. 2. The GAN is trained by providing the entire image randomly with cropped out (black) areas (or single image crops including at least some context from the scene). The network target during training of the GAN is the same image (or image crop) but without the respective areas being removed. Thus, the GAN learns to fill a realistic background into removed image areas. The GAN previously trained using such a procedure is now applied to perform the artefact compensation while training the deviation detection DNN using for instance segmentation 94.

Deletions $\tilde{D}_t$ (synchronized) on the other hand can be simulated straight forward as the sensor data does not have to be modified in this case. Instead, during training of the deviation detection DNN, the respective element is simply deleted from the map data and not projected as hypothesis into the image plane.

To simulate (synchronized) substitutions $\tilde{S}_t$, the sensor data remains unchanged as well, but the map data for that map element may be modified. Specifically, the main class of the element may be changed (e.g., a traffic sign becoming a traffic light) and its bounding shape parameters may be changed to represent realistic values (e.g., changed height and width of the former traffic sign hypothesis to mimic a traffic light bounding box).

Projection

The projection component 91 receives (simulated) verifications and deviations as input 90 and outputs a "map feature map" $m_t$ 95. The map elements comprising annotated evaluation states (verification, substitution, and insertion, without deletions since these have been removed from the map) may be projected as initial map hypotheses onto the image plane (projection 91) during training and inference regarding the deviation detection DNN in the instance segmentation component 94. To this end, a 2D "map feature map" $m_t$ is created with the same resolution as the camera image $x_t$ that may be concatenated to the RGB features, serving as input 93 to the deviation detection DNN in the instance segmentation 94. To project map elements, their respective bounding shape parameters provided by the map may be used. All pixels of the map feature map that lie within a projected bounding shape of a projected map element are attributed with the respective map features. Such map features may comprise the main class of the projected map element and bounding shape features. Moreover, the RGB features may be first converted into more abstract features before fusion with the map data. Also, feature extraction may be applied to the map feature map first before fusion with the image data. Different fusion strategies for fusing map and image data may be considered, e.g., using concatenation as aforementioned, or converting both image and map feature map into single feature vectors that are fused using a separate fully connected layer within the network.

Instance Segmentation

In a preferred embodiment, the instance segmentation 94 is implemented using a DNN. When performing instance segmentation, the network predicts segmentation masks for each individual object (map element) instance. As input 93, the instance segmentation 94 receives the RGB camera image (if necessary normalized using conventional methods) $x_t$ and the map feature map $m_t$ created by the projection of map elements, which may be concatenated to the RGB image.

Subsequently, the output variants C1 and C2 introduced earlier are described in greater detail.

First variant (C1) output 96: instance segmentation. In this variant, the network performs a conventional instance segmentation, whereby the network output comprises only an object list $(\hat{\varepsilon}_t)$ including the element's classification regarding the main class (e.g., sign, light, pole, etc.), and the associated segmentation mask. As no deviations have to be predicted by the network directly, no deviations have to be simulated during network training, and, thus, also no artefacts have to be compensated. However, in this case, a post-processing module 97 may be necessary to obtain map deviations as aforementioned. During such post-processing, the predicted elements are compared in 2D with the projected map elements from the stored map to identify the evaluation state of the predicted object (verification, deletion, insertion, or substitution: $\hat{V}_t \cup \hat{D}_t \cup \hat{I}_t \cup \hat{S}_t$). As association metric measuring the overlap of the predicted and the projected mask of a respective map element, overlapping pixels of both masks may be counted and may be set in relation to the total amount of pixels of both masks, which yields an approximation of the commonly used "intersection over union" (IoU) metric. Alternatively, bounding boxes or bounding polygons may be computed from the segmentation masks, which directly allows for the application of the IoU metric. For instance, if the IoU exceeds a specific threshold and the main class of the predicted and the projected element matches, the predicted element can be considered as verification. If no predicted element can be associated, the (projected) element from the map is classified as insertion. Vice versa, if no projected element can be associated to a predicted element, a deletion is identified. Substitutions are created, if the bounding boxes yield a significant overlap with a changed (main) class, e.g., the predicted bounding box is classified as traffic sign while the projected bounding box hypothesizes a traffic light.

Second variant (C2) output 96: integrated classification of map deviations. In this preferred variant, the network (in addition to the instance segmentation output that comprises segmentation masks for each object instance) may also directly outputs the classified evaluation state for each object instance (verification, deletion, insertion, or substitution). Thereby, the prediction of the evaluation state may be provided for each pixel. Thus, as the predicted evaluation state may not be the same for all pixels belonging to an object instance, post-processing may have to be applied to the segmentation mask, e.g., using a majority vote. For instance, if the majority of pixels belonging to an object instance predicts "verification" and only few pixels predict "substitution", the predicted object instance may be provided with the evaluation state "verification".

To train the deviation detection DNN, deviations may be simulated. This may also require the compensation of artefacts that occur during the generation of insertions. During training, a map element from the stored map may either becoming a (ground truth) verification, deletion, insertion, or substitution, with the training target for the evaluation state being set accordingly. This variant may omit the comparison of predicted and examined map elements (applied in the post-processing module 97 in Fig. 2 for variant C1), as the evaluation state is predicted directly. Thus, each predicted object instance (being a map element) can be attributed to the respective lists of verifications $\hat{V}_t$, deletions $\hat{D}_t$, insertions $\hat{I}_t$, and substitutions $\hat{S}_t$.

Alternatively to a DNN performing instance segmentation, and object detection task may be considered as approximation, e.g., predicting rectangular bounding boxes instead of segmentation masks. However, it is expected that an instance segmentation DNN may perform better as conflicting evaluation states for map elements (due to overlapping predicted bounding boxes, for instance) may be prevented, as segmentation masks do not overlap.

Occluded Map Elements

There are several variants to determine unknown map elements belonging to the set $U_t$ due to occlusion, which have so far not been discussed. Two variants (U1 and U2) will be described in the following.

First variant U1: determination via the instance segmentation in Fig. 2. Since, for example, a neural network is able to segment a large number of classes (e.g. vehicle, infrastructure, etc.), it may also be able to identify unknown map elements, since the RGB features do not match the map feature map comprising the projected map elements, e.g., if a map element is covered by a vehicle as part of the movable part of the environment. Note that in the real world, the distinction between "unknown" and "insertion" (whereby in both cases the RGB features are not matching the map hypothesis) is not distinct, as in camera images, map elements may be occluded by movable and stationary parts of the environment, depending on the camera perspective. Thus, the network has no means to distinguish both cases. However, we henceforth define the "unknown" evaluation state only to be caused by movable parts of the environment (vehicles, pedestrians, etc.). Any misclassifications (e.g., an insertion is being predicted instead of a verification while the element is actually just occluded in the image data by some stationary part of the environment) would only by temporary. These cases and can be filtered during recursive state estimation 33, which is provided with the history regarding previously predicted evaluation states. For instance, an element being predicted consistently as verification in previous timestamps cannot appear as insertion, suddenly, and must only be occluded temporarily therefore.

To incorporate the "unknown" state into the classification of evaluation states during instance segmentation 94 (defined as occlusion by movable parts of the environment), respective instances must be known during training time. To this end, the first variant (U1) may require a semantic segmentation of the camera image by another network that is independent of the network for instance segmentation 94, specifically into "movable" or "stationary" (part of the environment). The camera image may be first segmented semantically via the respective network. A map element from the stored map (which is assumed to be correct without any deviations) is then projected into this segmentation mask. As occlusion metric, the proportion of pixels within the projected bounding shape classified as movable relative to the total number of pixels in the projected shape may be used. If such a relation exceeds a specific threshold, the element is provided with the "unknown" state for a subsequent training of the deviation detection DNN used during instance segmentation 94.

Alternatively, an object detection network may be used instead of a pixelwise segmentation to identify respective movable parts of the environment. To classify (projected) map elements as "unknown", the IoU metric

can be applied, measuring the overlap of the predicted bounding box for the "movable" object instance with a projected bounding shape. Also in this case, if the IoU exceeds a specific threshold, the map element can be classified as "unknown" for the subsequent training of the deviation detection DNN.

Second variant (U2): Filtering of unknown map elements in the projection step. This variant requires an existing semantic segmentation or instance segmentation by another network identifying movable parts of the environment, as discussed for variant U1. Such a network is usually available anyway for the perception module of an automated vehicle. At system runtime, unknown map elements may be identified in the Projection component 91 in the same way as described for U1. Map elements classified as unknown (due to occlusion by some movable part of the environment) are then excluded from being projected into the camera image (in consequence not being part the map feature map) and are, therefore, not considered during instance segmentation 94.

Downstream Classification (Evaluation of Discrete Attributes)

Regarding the definition of verification and substitution, also further attributes other than the main class (e.g., "sign"), e.g., discrete subclass attributes (e.g., "stop" sign) may be considered. For instance, a changed discrete subclass attribute with the main class remaining unchanged may be considered as substitution instead of as verification. However, for these cases to be identified by the deviation detection DNN during instance segmentation 94, respective classes have to be encoded in the map feature map during projection 91.

Evaluating also subclasses with the deviation detection DNN, especially given the simultaneous evaluation of multiple HD map element types, may be a too complex task to handle for a single network. Thus, in particular if discrete attributes feature a large number of possible values (e.g., the subclass of a traffic sign), a two-stage procedure may be useful, with the evaluation of attributes being the second stage after the (initial) detection of verifications, deletions, insertions, and substitutions. In this case, segmented object instances are cut out of the image and transferred to a special classifier (classification 900 in Fig. 2), which may carry out a detailed classification (e.g. implemented using a specialized neural network). The class obtained in this way may be then compared with the class stored in the map in order to identify attributional deviations (the comparison step is omitted in Fig. 2 for better clarity). If an (discrete) attributional deviation is detected, the element is excluded of the (initial) list of verifications and added to the list of elements featuring deviating discrete attributes

$$\hat{F}_t^{A,dtc} \subset \hat{F}_t^{A} \quad 902.$$

3D Positioning (Evaluation of Continuous Attributes)

In order to evaluate the continuous attributes of a map element (e.g. position and orientation of the map element in 3D space), a 3D positioning (901 in Fig. 2) of the map element may be carried out. Also in this case, two variants may be considered.

Regarding the first variant in the preferred embodiment, the 3D positioning 901 is also implemented using a two-stage procedure that takes the deviation detection results of the instance segmentation 94 (or the post-processing 97 component, respectively) as an input. To obtain necessary distance measurements, a LiDAR or RADAR sensor may be used as additional input 84 to the 3D positioning component 901. Alternatively, a depth estimate for the camera image can be calculated using a neural network in order to obtain an estimated depth for each pixel. Corresponding point measurements may be projected into the camera image. All point measurements that lie within the polygon of the semantically segmented element may be combined into one set. A known geometry (e.g. a plane for a sign) may then be fitted to this set of point measurements using algorithms known in the art, e.g. via the RANSAC algorithm. The parameters of this geometry are compared with the stored attributes of the examined map element in order to determine deviations. If these deviations are above a certain threshold value, the map element is included in the set of deviating elements $\hat{F}_t^{A,cnt} \subset \hat{F}_t^{A}$ 903.

In the second variant, the prediction of continuous attributes (such as position and orientation) may be obtained from the instance segmentation 94 in Fig. 2 directly. To this end, a "depth feature map" may be created (similar to the map feature map as described previously) by projecting LiDAR or RADAR measurements into the camera image. Pixels on which measurements are projected are attributed with the respective measurement (e.g., range and intensity of the reflected beam). Alternatively or in addition to that, a pixelwise depth estimation may be obtained, e.g., by another network. Using such depth feature map, the deviation detection DNN (or the object detection DNN, respectively) used during instance segmentation 94 may additionally predict the 3D attributes (such as position, orientation, width, height) of map elements (e.g., verification, deletions, substitutions).

Instead of predicting the continuous attributes of such elements directly, it may be possible to predict the attributional difference between the (real world) element found in the sensor data and the map hypothesis. Also note that such procedure may be integrated into the deviation simulation, as the continuous attributes of elements in the map can easily be adopted - yielding a data augmentation strategy by which the amount of training data to predict attributional deviations can be increased indefinitely.

**Reference signs**

30    overall system for map deviation detection (MDD)
31    data association component
32    deviation detection component
33    recursive state estimation component
34    map elements in range as subset of all map elements $\mathcal{E}_{t''}^{\text{range}} \subset \mathcal{E}$
35    time sequence of camera images $x_1^t$
36    time sequence of point clouds $P_1^{t'}$
37    time sequence of localization poses $l_1^{t''}$
38    time sequence of odometry measurements $o_1^{t'''}$
39    sample $q_t$
40    predicted evaluated map elements for each sample $\hat{\mathcal{E}}_t^{\text{eval}}$
41    stabilized evaluated map elements output at timestamp $t$
42    component proving the output for the previous timestamp $t$ - 1
43    stabilized evaluated map elements $\mathcal{E}_{t-1}^{\text{eval}}$ output at timestamp $t$ - 1

80    system implementing the deviation detection component (including components for training)
81    input sources, such as sensors sources, for example from camera, map, LiDAR
82    image $x_t$ as input to an artefact compensation
83    (synchronized) map elements in range $\tilde{\mathcal{E}}_t^{\text{range}}$ as input to a deviation simulation
84    (synchronized) point cloud $\tilde{P}_t$ as input to a 3D positioning component
85    artefact compensation component
86    GAN (generative adversarial network)
87    deviation simulation component
88    (synchronized) insertions $\tilde{I}_t$
89    image with compensated artefacts $x_t'$ as output of an artefact compensation
90    (synchronized) verifications $\tilde{V}_t$, deletions $\tilde{D}_t$, insertions $\tilde{I}_t$, and substitutions $\tilde{S}_t$ as output of a deviation simulation component
91    projection component
92    concatenation component
93    (augmented) image (including the map feature map) $x_t''$ as input to the instance segmentation
94    instance segmentation component featuring a neural network
95    map feature map $m_t$
96    output of instance segmentation output (in case of variant C1): predicted map elements $\hat{\varepsilon}_t$ output (in case of variant C2): predicted deviations ($\hat{V}_t \cup \hat{D}_t \cup \hat{I}_t \cup \hat{S}_t$)
97    post-processing component
99    output of the post-processing component ($\hat{V}_t \cup \hat{D}_t \cup \hat{I}_t \cup \hat{S}_t$)
900    classification component
901    3D positioning component
902    predicted deviations (elements featuring discrete attributional deviations ($\hat{F}_t^{\text{A,dtc}}$)
903    predicted deviations (elements featuring continuous attributional deviations ($\hat{F}_t^{\text{A,cnt}}$)

**Claims**

1.  Method for a detection of map deviations and verifications comprising

    receiving sensor data as image data from a camera providing a camera image;
    receiving data from a map comprising map elements;
    projecting the map elements from the map into the camera image;
    providing a processed map by projecting map elements from the map into the camera image;
    **characterized by**:

    providing the camera image and the processed map as input to an instance segmentation;
    performing the instance segmentation using a neural network detecting map deviations and verifications of map elements, wherein map deviations are deviations between the map and the real vehicle environment and wherein verifications of map elements are elements identified as correctly represented in the map; and
    providing a classification for map elements as a result of the instance segmentation.

2.  Method according to claim 1, whereby a three-dimensional positioning of elements (901) is carried out within the network directly by using LiDAR, RADAR, or depth estimations for pixels as additional input (84).

3.  Method according to claim 1 or claim 2, further comprising
    providing an artefact compensation component (85), wherein the artefact compensation component (85) is adapted to receive image data from the camera.

4.  Method according to any one of the claims 1 to 3, further comprising providing an interpolation of pixels.

5. Method according to claim 3, further comprising receiving input data from a GAN (86) for providing an artefact compensation by the artefact compensation component (85).

6. Method according to any one of the claims 1 to 5, wherein
by performing the instance segmentation (94) predicting an "unknown" state for occluded elements.

7. Method according to any one of the claims 1 to 6, further comprising
utilizing main classes for segmentation of elements by the instance segmentation component (94) comprising at least signs, lights, poles, markings, lanes, and construction site elements as main classes.

8. Method according to any one of the claims 1 to 7, wherein
the method is performed during a movement of a vehicle.

9. Method according to any one of the claims 1 to 8, wherein
the classification (900) is provided as a two-stage procedure.

10. System for a detection of map deviations and verifications comprising

a projection component (91);
and an instance segmentation component (94);
wherein the a projection component (91) is projecting map elements from a map into the camera image;
**characterized in that**
the instance segmentation component (94) is provided with the camera image and the projected map elements as input and is adapted to perform an instance segmentation (94) using a neural network detecting map deviations and verifications of map elements, wherein map deviations are deviations between the map and the real vehicle environment and wherein verifications of map elements are elements identified as correctly represented in the map; and
the system further comprising
an artefact compensation component (85);
a deviation simulation component (87) for training purpose;
wherein the artefact compensation component (85) is adapted to receive sensor data as image data from a camera providing a camera image;
wherein the deviation simulation component (87) data is adapted to receive data from the map; comprising map elements; and
a classification component (900) providing a classification for map elements as a result of the instance segmentation.

11. System according to claim 10, further comprising
a post-processing component (97) which is adapted to receive the output of the instance segmentation component (94).

12. System according to claim 9 or claim 10, further comprising
a three-dimensional positioning component (901) which is adapted to receive input data of a sensor, in particular of a LiDAR or RADAR sensor, or receiving input data from a depth estimation algorithm.

13. System according to claim 12, wherein
the three-dimensional positioning component (901) is adapted to receive input data from the post-processing component (97).

14. System according to any one of the claims 10 to 13, wherein
the projection component (91) is adapted to filter unknown map elements.

15. Vehicle, in particular an autonomous driving vehicle, comprising a system according to any one of the claims 10 to 14.

**Patentansprüche**

1. Verfahren für eine Erkennung von Kartenabweichungen und Verifikationen, umfassend

Empfangen von Sensordaten als Bilddaten von einer Kamera, die ein Kamerabild bereitstellt;
Empfangen von Daten von einer Karte, umfassend Kartenelemente;
Projizieren der Kartenelemente aus der Karte in das Kamerabild;
Bereitstellen einer verarbeiteten Karte durch Projizieren von Kartenelementen aus der Karte in das Kamerabild; **gekennzeichnet durch:**

Bereitstellen des Kamerabilds und der verarbeiteten Karte als Eingabe für eine Instanzsegmentierung;
Durchführen der Instanzsegmentierung unter Verwendung eines neuronalen Netzwerks, das Kartenabweichungen und Verifikationen von Kartenelementen erkennt, wobei Kartenabweichungen Abweichungen zwischen der Karte und der realen Fahrzeugumgebung sind und wobei Verifikationen von Kartenelementen Elemente sind, die als korrekt in der Karte dargestellt identifiziert werden; und

Bereitstellen einer Klassifizierung für Kartenelemente als ein Ergebnis der Instanzsegmentierung.

2. Verfahren nach Anspruch 1, wobei eine dreidimensionale Positionierung von Elementen (901) direkt innerhalb des Netzwerks durch Verwenden von LiDAR, RADAR oder Tiefenschätzungen für Pixel als zusätzliche Eingabe (84) durchgeführt wird.

3. Verfahren nach Anspruch 1 oder 2, ferner umfassend das Bereitstellen einer Artefaktkompensationskomponente (85), wobei die Artefaktkompensationskomponente (85) angepasst ist, um Bilddaten von der Kamera zu empfangen.

4. Verfahren nach einem der Ansprüche 1 bis 3, ferner umfassend das Bereitstellen einer Interpolation von Pixeln.

5. Verfahren nach Anspruch 3, ferner umfassend das Empfangen von Eingabedaten von einem GAN (86) zum Bereitstellen einer Artefaktkompensation durch die Artefaktkompensationskomponente (85).

6. Verfahren nach einem der Ansprüche 1 bis 5, wobei durch Durchführen der Instanzsegmentierung (94) ein "unbekannter" Zustand für verdeckte Elemente vorhergesagt wird.

7. Verfahren nach einem der Ansprüche 1 bis 6, ferner umfassend ein Nutzen von Hauptklassen für die Segmentierung von Elementen durch die Instanzsegmentierungskomponente (94), umfassend mindestens Schilder, Lichter, Pfosten, Markierungen, Fahrspuren und Baustellenelemente als Hauptklassen.

8. Verfahren nach einem der Ansprüche 1 bis 7, wobei das Verfahren während einer Bewegung eines Fahrzeugs durchgeführt wird.

9. Verfahren nach einem der Ansprüche 1 bis 8, wobei die Klassifizierung (900) als ein zweistufiges Verfahren bereitgestellt wird.

10. System für eine Erkennung von Kartenabweichungen und Verifikationen, umfassend

eine Projektionskomponente (91); und eine Instanzsegmentierungskomponente (94); wobei die Projektionskomponente (91) Kartenelemente aus einer Karte in das Kamerabild projiziert; **dadurch gekennzeichnet, dass**

die Instanzsegmentierungskomponente (94) mit dem Kamerabild und den projizierten Kartenelementen als Eingabe bereitgestellt wird und angepasst ist, um eine Instanzsegmentierung (94) unter Verwendung eines neuronalen Netzwerks durchzuführen, das Kartenabweichungen und Verifikationen von Kartenelementen erkennt, wobei Kartenabweichungen Abweichungen zwischen der Karte und der realen Fahrzeugumgebung sind und wobei Verifikationen von Kartenelementen Elemente sind, die als korrekt in der Karte dargestellt identifiziert werden; und

das System ferner umfassend eine Artefaktkompensationskomponente (85);

eine Abweichungssimulationskomponente (87) für einen Trainingszweck;

wobei die Artefaktkompensationskomponente (85) angepasst ist, um Sensordaten als Bilddaten von einer Kamera zu empfangen, die ein Kamerabild bereitstellt;

wobei die Daten der Abweichungssimulationskomponente (87) angepasst sind, um Daten von der Karte zu empfangen; umfassend Kartenelemente; und

eine Klassifizierungskomponente (900), die eine Klassifizierung für Kartenelemente als ein Ergebnis der Instanzsegmentierung bereitstellt.

11. System nach Anspruch 10, ferner umfassend eine Nachverarbeitungskomponente (97), die angepasst ist, um die Ausgabe der Instanzsegmentierungskomponente (94) zu empfangen.

12. System nach Anspruch 9 oder Anspruch 10, ferner umfassend eine dreidimensionale Positionierungskomponente (901), die angepasst ist, um Eingabedaten eines Sensors, insbesondere eines LiDAR- oder RADAR-Sensors, zu empfangen, oder Eingabedaten von einem Tiefenschätzungsalgorithmus zu empfangen.

13. System nach Anspruch 12, wobei die dreidimensionale Positionierungskomponente (901) angepasst ist, um Eingabedaten von der Nachbearbeitungskomponente (97) zu empfangen.

14. System nach einem der Ansprüche 10 bis 13, wobei die Projektionskomponente (91) angepasst ist, um unbekannte Kartenelemente zu filtern.

15. Fahrzeug, insbesondere ein autonom fahrendes Fahrzeug, umfassend ein System nach einem der Ansprüche 10 bis 14.

## Revendications

1. Procédé pour une détection d'écarts cartographiques et de vérifications comprenant

   la réception de données de capteur comme données d'image provenant d'une caméra fournissant une image de caméra ;
   la réception de données provenant d'une carte comprenant des éléments cartographiques ;
   la projection des éléments cartographiques à partir de la carte dans l'image de caméra ;
   la fourniture d'une carte traitée en projetant des éléments cartographiques à partir de la carte dans l'image de caméra ; **caractérisé par** :

   la fourniture de l'image de caméra et de la carte traitée comme entrée à une segmentation d'instance ;
   la réalisation de la segmentation d'instance à l'aide d'un réseau neuronal détectant des écarts cartographiques et des vérifications d'éléments cartographiques, dans lequel les écarts cartographiques sont des écarts entre la carte et l'environnement réel du véhicule, et dans lequel des vérifications d'éléments cartographiques sont des éléments identifiés comme étant correctement représentés dans la carte ; et
   la fourniture d'une classification pour les éléments cartographiques à la suite de la segmentation d'instance.

2. Procédé selon la revendication 1, moyennant quoi un positionnement tridimensionnel d'éléments (901) est effectué au sein du réseau directement en utilisant un LiDAR, un RADAR ou des estimations de profondeur pour des pixels comme entrée supplémentaire (84).

3. Procédé selon la revendication 1 ou la revendication 2, comprenant en outre la fourniture d'un composant de compensation d'artefact (85), dans lequel le composant de compensation d'artefact (85) est conçu pour recevoir des données d'image provenant de la caméra.

4. Procédé selon l'une quelconque des revendications 1 à 3, comprenant en outre la fourniture d'une interpolation de pixels.

5. Procédé selon la revendication 3, comprenant en outre la réception de données d'entrée provenant d'un GAN (86) pour fournir une compensation d'artefact par le composant de compensation d'artefact (85).

6. Procédé selon l'une quelconque des revendications 1 à 5, dans lequel, en réalisant la segmentation d'instance (94), on prédit un état « inconnu » pour des éléments occlus.

7. Procédé selon l'une quelconque des revendications 1 à 6, comprenant en outre
   l'utilisation de classes principales pour la segmentation d'éléments par le composant de segmentation d'instance (94) comprenant au moins des panneaux, des lumières, des poteaux, des marquages, des voies et des éléments de chantier de construction comme classes principales.

8. Procédé selon l'une quelconque des revendications 1 à 7, dans lequel le procédé est réalisé pendant un déplacement d'un véhicule.

9. Procédé selon l'une quelconque des revendications 1 à 8, dans lequel la classification (900) est fournie sous la forme d'une procédure en deux étapes.

10. Système pour une détection d'écarts cartographiques et de vérifications comprenant

    un composant de projection (91) ;
    et un composant de segmentation d'instance (94) ;
    dans lequel le composant de projection (91) projette des éléments cartographiques à partir d'une carte dans l'image de caméra ;
    **caractérisé en ce que**
    le composant de segmentation d'instance (94) est fourni avec l'image de caméra et les éléments cartographiques projetés comme entrée et est conçu pour réaliser une segmentation d'instance (94) à l'aide d'un réseau neuronal détectant des écarts cartographiques et des vérifications d'éléments cartographiques, dans lequel les écarts cartographiques sont des écarts entre la carte et l'environnement réel du véhicule, et dans lequel des vérifications d'éléments cartographiques sont des éléments identifiés comme étant correctement représentés dans la carte ; et
    le système comprenant en outre un composant de compensation d'artefact (85) ;
    un composant de simulation de d'écart (87) à des fins d'entraînement ;
    dans lequel le composant de compensation d'artefact (85) est conçu pour recevoir des données de capteur comme données d'image provenant d'une caméra fournissant une image de caméra ;
    dans lequel les données de composant de simulation d'écart (87) sont conçues pour recevoir des données provenant de la carte ; comprenant des éléments cartographiques ; et
    un composant de classification (900) fournissant une classification pour des éléments cartographiques à la suite de la segmentation d'instance.

**11.** Système selon la revendication 10, comprenant en outre un composant de post-traitement (97) qui est conçu pour recevoir la sortie du composant de segmentation d'instance (94).

**12.** Système selon la revendication 9 ou la revendication 10, comprenant en outre un composant de positionnement tridimensionnel (901) qui est conçu pour recevoir des données d'entrée d'un capteur, en particulier d'un capteur LiDAR ou RADAR, ou pour recevoir des données d'entrée provenant d'un algorithme d'estimation de profondeur.

**13.** Système selon la revendication 12, dans lequel le composant de positionnement tridimensionnel (901) est conçu pour recevoir des données d'entrée provenant du composant de post-traitement (97).

**14.** Système selon l'une quelconque des revendications 10 à 13, dans lequel le composant de projection (91) est conçu pour filtrer des éléments cartographiques inconnus.

**15.** Véhicule, en particulier un véhicule à conduite autonome, comprenant un système selon l'une quelconque des revendications 10 à 14.

Fig. 1

80

86

GAN

99

$\widehat{V}_t \cup \widehat{D}_t \cup \widehat{I}_t \cup \widehat{S}_t$

Camera $\quad x_t$ → Artefact Compensation → $x'_t$ → Concat → $x''_t$ → Instance Segmentation → Post-Processing → Classification → $\widehat{F}_t^{A,dtc}$

82

85

89

92

93

94

97

900

902

$\widetilde{I}_t$

88

$\widetilde{\mathcal{E}}_t^{range}$

Map

83

Deviation Simulation

87

Projection

90

$m_t$

95

91

96

C1: $\widehat{\mathcal{E}}_t$

C2: $\widehat{V}_t \cup \widehat{D}_t \cup \widehat{I}_t \cup \widehat{S}_t$

$\widetilde{V}_t \cup \widetilde{D}_t \cup \widetilde{I}_t \cup \widetilde{S}_t$

99

LiDAR $\quad \widetilde{P}_t$

81

84

3D Positioning → $\widehat{F}_t^{A,cnt}$

901

903

EP 4 379 321 B1

**Fig. 2**

**EP 4 379 321 B1**

**Patent documents cited in the description**

- US 20210231460 A1
- US 2022197286 A1
- US 2021331703 A1